# EUROPEAN PATENT APPLICATION

(11) **EP 4 468 387 A1**
(43) Date of publication of application: **27.11.2024**
(21) Application number: 23194517.1
(22) Date of filing: 31.08.2023
(51) Int. Cl.: H01M 4/13, H01M 10/05, H01M 10/058, H01M 10/42, H01M 4/02, H01M 10/052

(54) **ELECTODES WITH CAVITIES**

(30) Priority: 22.05.2023 US 202318321541
(71) Applicant: II-VI Delaware, Inc., Wilmington, DE 19890 (US)
(72) Inventor: LAN, Di, Wilmington, 19890 (US); LU, Xinyu, Wilmington, 19890 (US); GAO, Zan, Wilmington, 19890 (US); Xu, Wen-Qing, Wilmington, 19890 (US)
(74) Representative: Tegethoff, Sebastian

(57) **Abstract**

This disclosure is directed an electrode and an electrochemical device having an electrode. The electrode includes a body with an active material that can react with ions in an electrochemical reaction within the electrochemical device. The body has a first surface that can abut against electrolyte of a separator of the electrochemical device, and second surfaces that define a plurality of cavities extending a depth from the first surface into the electrode. The plurality of cavities define pathways into the electrode that receive the electrolyte. The pathways improve ion transfer from the electrolyte to an inner subset of the active material that is located closer to one or more of the pathways than to the first surface.

## Description

### Field of the Invention

This disclosure is generally directed to the field of electrochemical energy, and more particularly to electrodes with cavities that increase electrochemical device performance.

### Brief description of the related art

Batteries provide a useful means of storing energy for later use. But there exists a need for batteries with improved energy density, increased charge/discharge rate capabilities, and increased cycling stability.

### Summary of the Disclosure

The inventors recognized that adding cavities into electrodes can improve energy density, increase charge/discharge rate capabilities, and increase cycling stability. Accordingly, one aspect of this disclosure is directed to an electrode that includes a body with an active material configured to react with ions in an electrochemical reaction within an electrochemical device. The body may include: a first surface configured to interface with a separator of the electrochemical device and second surfaces that define a plurality of cavities extending a depth from the first surface into the electrode. The plurality of cavities define pathways into the electrode that are configured to receive the electrolyte of the separator. The pathways are configured to improve ion transfer from the electrolyte to an inner subset of the active material that is located closer to one or more of the pathways than to the first surface.

Implementations may include one or more of the following features. A combined area of the first surface and the second surfaces is at least 10% greater than an area bounded by a perimeter of the first surface. A combined volume of the plurality of cavities is less than 30% of a total volume of the electrode. The depth is at least greater than 30% of a thickness of the electrode. The electrode defines pores and a size of each of the plurality of cavities is greater than an average size of the pores. The size of each of the plurality of cavities is greater than a size of a largest pore of the pores. The size of each of the plurality of cavities is more than 15 times greater than the average size of the pores. The size of each of the plurality of cavities is between 2 and 15 times greater than the average size of the pores. The plurality of cavities define a cylindrical, pyramidal, conical, rectangular, square, or polygonal shape. The electrode is a cathode. The cathode may include at least one of oxygen, sulfur, selenium, or tellurium. The plurality of cavities are arranged in a regular matrix or an irregular matrix.

Another general aspect of this disclosure is directed to an electrochemical device that includes a first electrode and a second electrode. The second electrode may include a body that includes an active material configured to react with ions in an electrochemical reaction within the electrochemical device. The body may include a first surface and a plurality of cavities extending a depth from the first surface into the second electrode. The device also includes a separator that may include an electrolyte. The separator is arranged between the first electrode and the second electrode and prevents direct electrical connection between the first electrode and the second electrode. The first surface abuts against the electrolyte. The plurality of cavities define pathways into the second electrode that receive the electrolyte. The pathways are configured to improve ion transfer from the electrolyte to an inner subset of the active material that is located closer to one or more of the pathways than to the first surface.

Implementations may include one or more of the following features. A mean distance between the electrolyte within the pathways and the active material within the inner subset of the second electrode is at least 20% less than a mean distance between the electrolyte that abuts the first surface and the active material within the inner subset of the second electrode. The second electrode defines pores and a size of each of the plurality of cavities is greater than an average size of the pores. The second electrode is a cathode. The second electrode is an anode. The first electrode is an anode and the second electrode is a cathode. The first electrode may include a body that includes an active material configured to react with the ions in an electrochemical reaction within the electrochemical device. The body may include a first surface and a plurality of cavities extending a depth from the first surface into the first electrode. The first surface of the first electrode abuts against the electrolyte. The plurality of cavities of the first electrode define pathways into the first electrode that receive the electrolyte. The pathways of the first electrode are configured to improve ion transfer from the electrolyte to an inner subset of the active material of the first electrode that is located closer to one or more of the pathways of the first electrode than to the first surface of the first electrode.

Another general aspect of this disclosure can include a method of manufacturing an electrode. The method of manufacturing includes forming a body of the electrode that includes an active material that is configured to react with ions in an electrochemical reaction within a electrochemical device. The body may include pores. The method of manufacturing also includes forming a plurality of cavities within the body extending a depth from a first surface of the body. A size of each of the plurality of cavities is greater than an average size of the pores.

Implementations may include one or more of the following features. The method where forming the plurality of cavities may include one of laser drilling, indenting, mechanical milling, electron beam machining, focused ion beam milling, electrical discharge milling, microfabrication, reactive-ion etching, imprinting, or three-dimensional printing.

Various additional features and advantages of this invention will become apparent to those of ordinary skill in the art upon review of the following detailed description of the illustrative embodiments taken in conjunction with the accompanying drawings.

### Brief Description of the Drawings

The following detailed description is better understood when read in conjunction with the appended drawings. For the purposes of illustration, examples are shown in the drawings; however, the subject matter is not limited to the specific elements and instrumentalities disclosed. In the drawings:
Fig. 1 shows a schematic cross-section view of an electrochemical device;
FIG. 2 shows a magnified, schematic, perspective view of the electrochemical device within region A of FIG. 1;
FIG. 3 shows a magnified view of an electrode with a cavity;
FIG. 4 shows a magnified view of another electrode with a plurality of cavities;
FIG. 5 shows a schematic top view of another electrode with a plurality of cavities;
FIG. 6 shows a schematic cross section view of another electrode with a plurality of cavities;
FIG. 7 shows a process of manufacturing an electrode;
FIG. 8 shows a graph of specific capacity electrochemical device test data as a function of cycles;
FIG. 9 shows another graph of specific capacity electrochemical device test data as function of cycles;
FIG. 10 shows still another graph of specific capacity electrochemical device test data as a function of cycles;
FIG. 11 shows a graph of charge-discharge curve test data;
FIG. 12 shows another graph of charge-discharge curve test data;
FIG. 13 shows a graph of diffusion coefficient test data during discharge; and
FIG. 14 shows a graph of diffusion coefficient test data during a charge.

### Detailed Description of the Disclosure

The technical problem is solved by the independent claims. The dependent claims cover further specific embodiments of the invention.

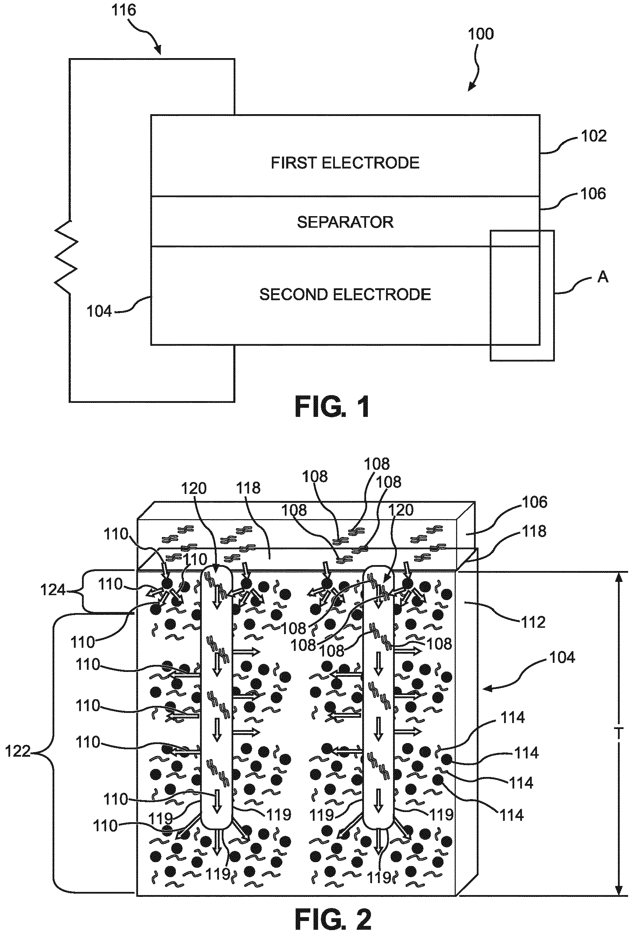

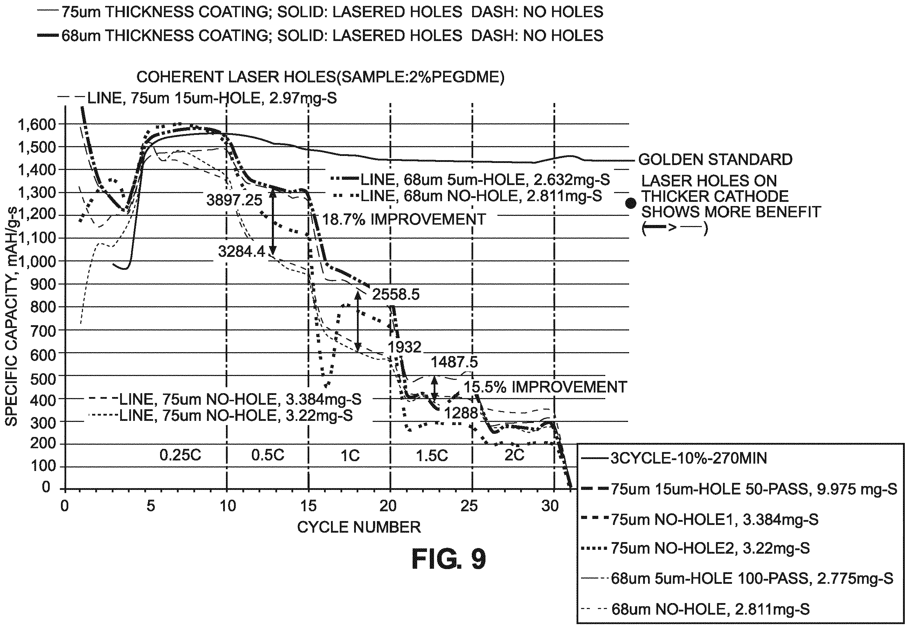

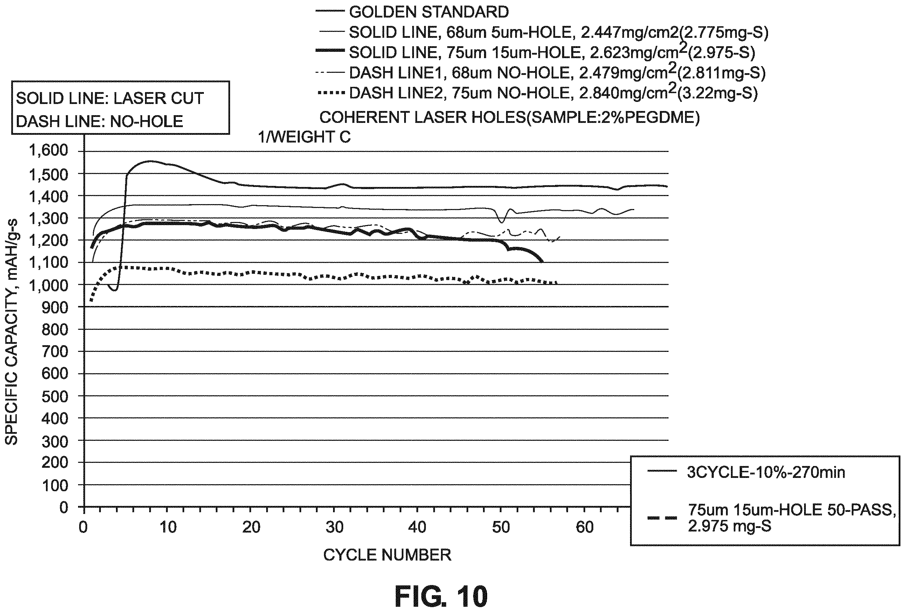

Aspects of this disclosure are directed to an electrode having a plurality of cavities. The cavities can form an artery system that can improve electrolyte penetration into the electrode. The cavities can increase the contact area or interface between active material of the electrode and the electrolyte. The cavities can reduce the distance between active material of the electrode and the electrolyte. This can shorten the pathway for ion diffusion in the electrode. The cavities can increase cell-level energy density for example by increasing the specific capacity per electrode area. The cavities can increase rate capacity and increase cycling stability. These and other aspects of the invention are described as follows with respect to FIGS. 1-14.

FIG. 1 shows a schematic, cross section view of an electrochemical device 100 according to aspects of this disclosure. FIG. 2 shows a magnified, schematic, perspective view of the electrochemical device 100 within region A of FIG. 1. In embodiments, the electrochemical device 100 can be a battery, fuel cell, among other possibilities. The electrochemical device 100 can include a first electrode 102, a second electrode 104, and a separator 106 that electrically isolates the first electrode 102 and the second electrode 104. The separator 106 can include an electrolyte 108 that can facilitate movement of ions 110 (e.g., lithium ions) between the first electrode 102 and the second electrode 104. The electrolyte 108 can prevent or inhibit movement of electrons between the first electrode 102 and the second electrode 104. In some embodiments, the first electrode 102 can be an anode and the second electrode 104 can be a cathode. In some alternative embodiments, the first electrode 102 can be a cathode and the second electrode 104 can be an anode.

The second electrode 104 can include a body 112 that can have an active material 114 that can react with the ions 110 in an electrochemical reaction within the electrochemical device 100. For example, in some embodiments in which the second electrode 104 is the cathode the active material 114 can acquire electrons from the first electrode 102, i.e., the anode, via an external circuit 116, and the active material 114 can be reduced in the electrochemical reaction. The active material can include, for example, one or more of oxygen, sulfur, selenium, tellurium, among other possibilities. In some embodiments, the body 112 can have a thickness between 60 and 80 µm including for example 68 µm and 75 µm, though other thicknesses are possible. In some embodiments in which the second electrode 104 is the anode the active material 114 can release electrons to the external circuit 116 and the active material 114 can be oxidized in an electrochemical reaction.

The body 112 of the second electrode 104 can include a first surface 118. The first surface 118 can abut against the separator 106. The body 112 of the second electrode 104 can include second surfaces 119 that define cavities 120 that can extend a depth from the first surface 118 into the second electrode 104. In some embodiments, only the second electrode 104 includes the cavities 120. In some alternative embodiments, the first electrode 102 and the second electrode 104 can each include the cavities 120. In some example embodiments, the cavities 120 can have a size (e.g., a diameter for a circular-shaped cavity, a largest distance spanning an irregular shaped cavity, among other possibilities) between 5 µm and 15 µm, though other sizes are possible. Any description herein of embodiments of the geometry of the body 112 of the second electrode 104 including description of the cavities 120 can apply to the first electrode 102 as well. That is, in some embodiments the first electrode 102 can include a body with cavities that can have any of the features and relationships of the body 112 and the cavities 120 of the second electrode 104. But in such embodiments the active material of the first electrode 102 can differ from the active material of the second electrode 104.

In some embodiments, each of the cavities 120 can be the same size and shape as each of the other cavities 120. Alternatively, one or more of the cavities 120 can have a size and/or shape that differs from one or more other cavities 120. Accordingly, any subsequent description of the size and/or shape of the plurality of cavities 120 can apply to all or some of the plurality of cavities 120.

The cavities 120 can define pathways into the second electrode 104 and the pathways can receive the electrolyte 108 of the separator 106. For example, FIG. 2 shows cavities 120 filled with the electrolyte 108. The ions 110 can move more freely within the electrolyte 108 than within the active material 114. Accordingly, by providing pathways into the second electrode 104 for the electrolyte 108 the cavities 120 can improve transfer of the ions 110 to an inner subset 122 of the active material 114 within the second electrode 104 that is located closer to one or more of the pathways then to the first surface 118. That is, the cavities 120 can improve transfer of the ions 110 to the inner subset 122 of the active material 114 by bringing electrolyte 108 that can carry the ions 110 closer to the inner subset 122 of the active material 114 as compared to the distance between the inner subset 122 and the first surface 118. The cavities 120 can increase the surface area of the second electrode 104 in contact with the electrolyte 108 and thereby improve transfer of the ions 110 to the active material 114. By improving the transfer of the ions 110 to the active material 114 in the inner subset 122, the cavities 120 can increase the overall energy density of the electrochemical device 100, can increase the charge/discharge rate capabilities of the electrochemical device 100, and can increase cycling stability of the electrochemical device 100. For example, in some embodiments and as compared to an electrochemical device without the cavities 120, the cavities 120 can improve a diffusion coefficient of the electrochemical device 100 by 3% or more, 6% or more, 9% or more, or 12% or more. In some embodiments and as compared to an electrochemical device without the cavities 120, the cavities 120 can improve a specific capacity of the electrochemical device 100 by 5% or more, 10% or more, 15% or more, or 20% or more at one of the following C-rates: 0.05.0.1, 0.25, 0.5, 1, 1.5, 2, or up to 20.

As shown in FIG. 2, the body 112 can include an outer subset 124 of the active material 114 that is disposed closer to the first surface 118 than to any of the pathways defined by the cavities 120. A majority of the ions 110 transferred to the outer subset 124 can travel from electrolyte 108 at the first surface 118. This is because the outer subset 124 of the active material 114 is disposed closer to the first surface 118 than to any of the pathways defined by the cavities 120. Conversely, a majority of the ions 110 transferred to the inner subset 122 can travel from electrolyte 108 within the nearest of the pathways defined by the cavities 120 since the inner subset 122 is disposed closer to at least one of the pathways defined by the cavities 120 than to the first surface 118. Put differently, the outer subset 124 of the active material 114 can be defined by the active material 114 of the second electrode 102 that is located closer to the first surface 118 than to any of the second surfaces 119 that define the cavities 120. The outer subset 124 can transfer ions 110 to and from the electrolyte 108 through normal diffusion through pores of the outer subset 124. The inner subset 122 of the active material can be defined by the active material 114 of the second electrode that is located closer to any of the second surfaces 119 than to the first surface 118. The inner subset 122 can transfer ions 110 to and from the electrolyte 108 within the plurality of cavities 120 since the electrolyte 108 within the cavities 120 is closer than the electrolyte 108 at the first surface 108.

The inventors recognized that the benefit of reducing the distance between the active material of the inner subset 122 and the electrolyte 108 can be balanced against the impact of removing active material to form the cavities 120 and against the impact of flooding the second electrode 104 with the electrolyte 108 (hereinafter "distance reduction impact-benefit balance"). The inventors have found a desirable distance reduction impact-benefit balance can be achieved by forming cavities 120 such that a mean distance between the electrolyte 108 within the pathways and the active material within the inner subset 122 is between 20% and 54% less than a mean distance between the electrolyte 108 that abuts the first surface 118 and the active material within the inner subset 122, though other ranges can be effective as well. This mean distance refers to the average distance of all points of active material within the respective subset and the respective electrolyte 108. For example, in some embodiments the mean distance between the electrolyte 108 within the pathways and the active material within the inner subset 122 can be at least 20% less than the mean distance between the electrolyte 108 that abuts the first surface 118 and the active material within the inner subset 122. In some embodiments, the mean distance between the electrolyte 108 within the pathways and the active material within the inner subset 122 can be at least 25% less than the mean distance between the electrolyte 108 that abuts the first surface 118 and the active material within the inner subset 122. In some embodiments, the mean distance between the electrolyte 108 within the pathways and the active material within the inner subset 122 can be at least 30% less than the mean distance between the electrolyte 108 that abuts the first surface 118 and the active material within the inner subset 122. In some embodiments, the mean distance between the electrolyte 108 within the pathways and the active material within the inner subset 122 can be at least 35% less than the mean distance between the electrolyte 108 that abuts the first surface 118 and the active material within the inner subset 122.

In some embodiments, a desirable distance reduction impact-benefit balance can be achieved by sizing the combined area of the first surface 118 and the second surfaces 119 relative to an area bounded by a perimeter of the first surface 118 (i.e., an area of the first surface 118 before the plurality of cavities 120 are formed). The area of any surfaces of the second electrode 104 can include the area of any pores of the second electrode 104, described further below. For example, in some embodiments the combined area of the first surface 118 and the second surfaces 119 can be between 10% and 70% greater than the area bounded by the perimeter of the first surface 118, though other ranges can be effective as well. In some embodiments, the combined area of the first surface 118 and the second surfaces 119 can be at least 10% greater than the area bounded by the perimeter of the first surface 118. In some embodiments, the combined area of the first surface 118 and the second surfaces 119 can be at least 30% greater than the area bounded by the perimeter of the first surface 118. In some embodiments, the combined area of the first surface 118 and the second surfaces 119 can be at least 50% greater than the area bounded by the perimeter of the first surface 118. In some embodiments, the combined area of the first surface 118 and the second surfaces 119 can be at least 70% greater than the area bounded by the perimeter of the first surface 118.

In some embodiments, a desirable distance reduction impact-benefit balance can be achieved by sizing the total volume of the plurality of cavities 120 relative to the total volume of the second electrode 104. The total volume of the second electrode 104 can include the volume of any pores of the second electrode 104, described further below. For example, in some embodiments a combined volume of the plurality of cavities 120 can be between 15% and 30% of the total volume of the second electrode 104, though other ranges can be effective as well. In some embodiments, the combined volume of the plurality of cavities 120 can be less than 30% of the total volume of the second electrode 104. In some embodiments, the combined volume of the plurality of cavities 120 can be less than 25% of the total volume of the second electrode 104. In some embodiments, the combined volume of the plurality of cavities 120 can be less than 20% of the total volume of the second electrode 104. In some embodiments, the combined volume of the plurality of cavities 120 can be less than 15% of the total volume of the second electrode 104.

In some embodiments, a desirable distance reduction impact-benefit balance can be achieved by sizing the depth of the plurality of cavities 120 relative to the total thickness T of the second electrode 104. For example, in some embodiments the depth of the plurality of cavities 120 can be between 30% and 100% of the thickness T of the second electrode 104, though other ranges can be effective as well. In some embodiments, the depth of the plurality of cavities 120 can be at least greater than 30% of the thickness T of the second electrode 104. In some embodiments, the depth of the plurality of cavities 120 can be at least greater than 50% of the thickness T of the second electrode 104. In some embodiments, the depth of the plurality of cavities 120 can be at least greater than 70% of the thickness T of the second electrode 104. In some embodiments, the depth of the plurality of cavities 120 can be at least greater than 90% of the thickness T of the second electrode 104.

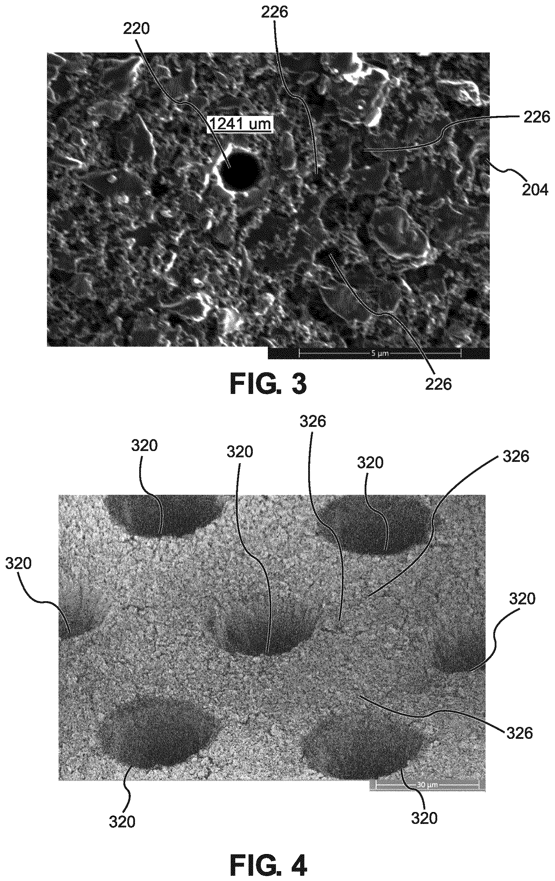

FIGS. 2 and 3 respectively show magnified views of other second electrodes 204, 304, according to aspects of the disclosure. The second electrodes 204, 304 can each include any of the structures, features, and relationships of the second electrode 104, and vice versa. For example, the second electrode 204 can include a cavity 220 and the second electrode 304 can include a plurality of cavities 320.

As shown in FIGS. 2 and 3, the second electrodes 204, 304 can respectively include pores 226, 326, which are distinguishable from the cavities 220, 320. Pores 226, 326 can be formed due to different material sizes inside electrode during fabrication and cavities 220, 320 can be designed and made during or after electrode fabrication. For example, the pores 226, 326 can be distributed evenly or randomly throughout the second electrodes 204, 304 while the cavities 220, 320 can be arranged deliberately in regular or irregular matrices. A size of each of the cavities 220, 320 can be greater than an average size of the respective pores 226, 326, as shown in FIGS. 2 and 3. In some embodiments, the size of each of the cavities 220, 320 can be between 2 and 15 times greater than the average size of the respective pores 226, 326, though other ranges can be effective as well. In some embodiments, a size of each of the cavities 220, 320 can be greater than a size of the largest pore 226, 326 of the respective second electrode 204, 304, as shown in FIGS. 2 and 3.

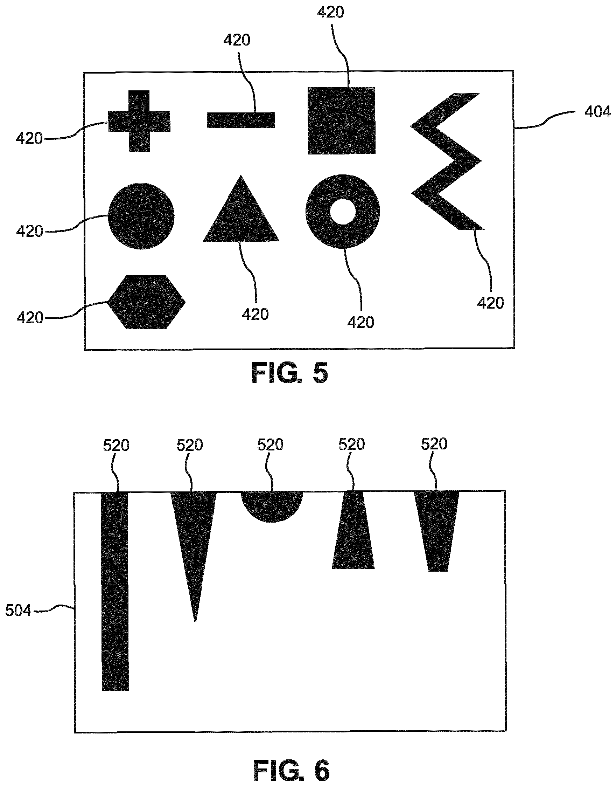

FIGS. 5 and 6 respectively show schematic top and cross section views of other second electrodes 404, 504. The second electrodes 404, 504 can each include any of the structures, features, and relationships of the second electrodes 104, 204, 304, and vice versa. For example, the second electrodes 404, 504 can respectively include a plurality of cavities 420, 520. As shown in FIGS. 5 and 6, the plurality of cavities 420, 520 can define any number of shapes in the top of the respective electrode 404, 504 and/or into a depth of the respective electrode 404, 504. The shapes can include, for example, cylindrical, pyramidal, conical, rectangular, square, polygonal, zig-zag shape, among other possibilities. The shapes can be uniform or nonuniform.

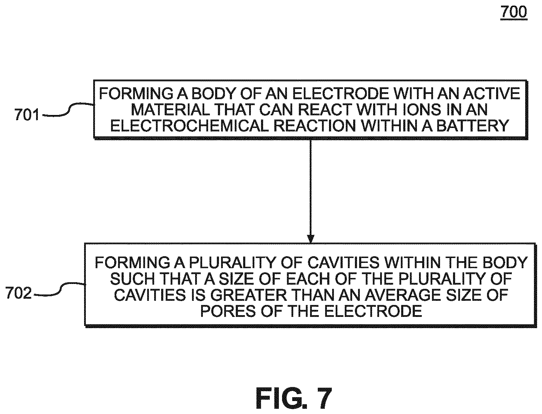

FIG. 7 shows a process 700 of manufacturing an electrode according to aspects of the disclosure. The process 700 can be used to manufacture any of the first and second electrodes 102, 104, 204, 304, 404, 504, previously described.

The process 700 can include, at step 701, forming a body of an electrode. The electrode can include an active material that is configured to react with ions in an electrochemical reaction within an electrochemical device, as previously described. The body can include pores. As previously described. The electrode can be formed using any number of known techniques, including for example coating among other possibilities.

The process 700 can include, at step 702, forming a plurality of cavities within the body extending a depth from a first surface of the body, as previously described. A size of each of the plurality of cavities can be greater than an average size of the pores or greater than the largest pore, as previously described. The cavities can be formed, for example, using laser drilling, indenting, mechanical milling, electron beam machining, focused ion beam milling, electrical discharge milling, microfabrication, reactive-ion etching, imprinting, three-dimensional printing, among other possibilities.

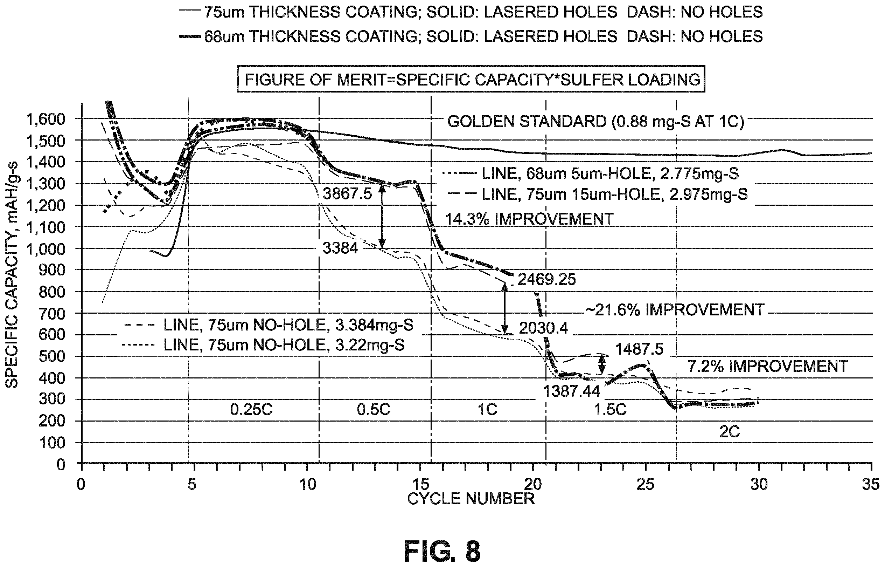

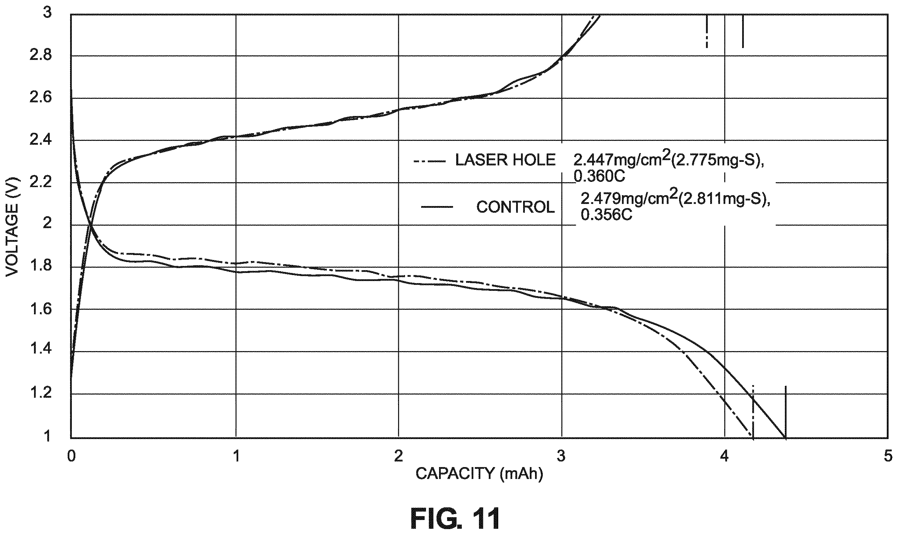

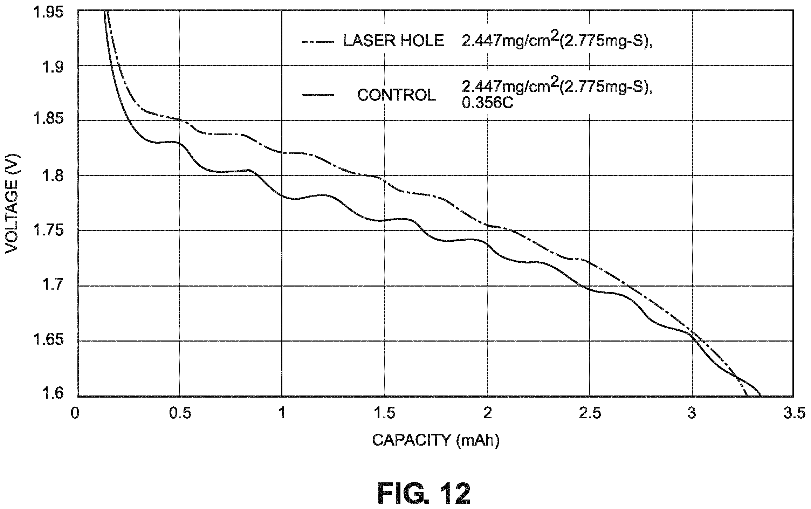

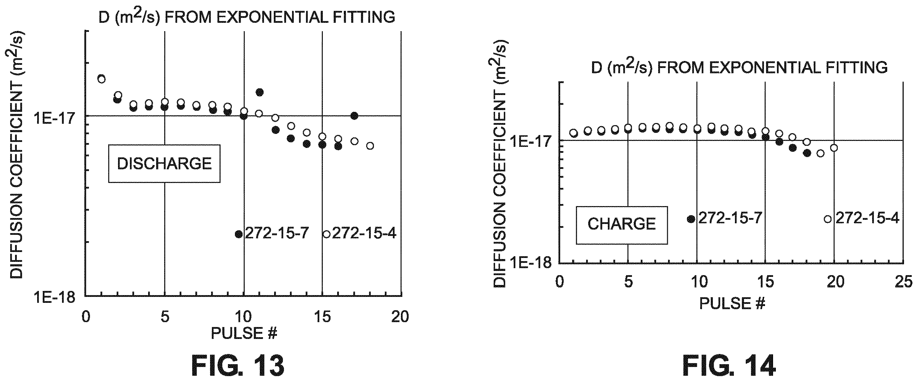

FIGS. 8-14 show test data demonstrating example improvements in electrochemical device performance resulting from the inclusion of the plurality of cavities (referred to as "holes" in the figures). The cavities of the cathodes (i.e., the second electrode 104) of the batteries tested can have a mean distance between the electrolyte 108 within the cavities and the active material within the inner subset 122 of between 20% and 54% less than a mean distance between the electrolyte 108 that abuts the first surface 118 and the active material within the inner subset 122, a combined area of the first surface 118 and the second surfaces 119 can be between 10% and 70% greater than the area bounded by the perimeter of the first surface 118, a combined volume of the plurality of cavities 120 can be between 15% and 30% of the total volume of the second electrode 104, and/or a depth of the plurality of cavities 120 can be between 30% and 100% of the thickness T of the second electrode 104, as previously described. FIGS. 8-10 demonstrate specific capacity improvements resulting from the cavities or holes for different batteries as a function of cycle number. FIGS. 11 and 12 demonstrate charge-discharge improvements resulting from the cavities or holes for different batteries. FIGS. 13 and 14 show diffusion coefficient improvements resulting from the cavities or holes for different batteries.

It will be appreciated that the foregoing description provides examples of the invention. However, it is contemplated that other implementations of the invention may differ in detail from the foregoing examples. All references to the invention or examples thereof are intended to reference the particular example being discussed at that point and are not intended to imply any limitation as to the scope of the invention more generally. All language of distinction and disparagement with respect to certain features is intended to indicate a lack of preference for those features, but not to exclude such from the scope of the invention entirely unless otherwise indicated

## Claims

1. An electrode comprising:
- a body that includes an active material configured to react with ions in an electrochemical reaction within an electrochemical device, wherein the body comprises:
- a first surface configured to interface with a separator of the electrochemical device; and
- second surfaces that define a plurality of cavities extending a depth from the first surface into the electrode, wherein the plurality of cavities define pathways into the electrode that are configured to receive the electrolyte of the separator, wherein the pathways are configured to improve ion transfer from the electrolyte to an inner subset of the active material that is located closer to one or more of the pathways than to the first surface.

2. The electrode of claim 1, wherein a combined area of the first surface and the second surfaces is at least 10% greater than an area bounded by a perimeter of the first surface.

3. The electrode of claim 1, wherein a combined volume of the plurality of cavities is less than 30% of a total volume of the electrode.

4. The electrode of claim 1, wherein the depth is at least greater than 30% of a thickness of the electrode.

5. The electrode of claim 1, wherein the electrode defines pores and a size of each of the plurality of cavities is greater than an average size of the pores.

6. The electrode of claim 5, wherein the size of each of the plurality of cavities is greater than a size of a largest pore of the pores.

7. The electrode of claim 5, wherein the size of each of the plurality of cavities is between 2 and 15 times greater than the average size of the pores.

8. The electrode of claim 6, wherein the size of each of the plurality of cavities is more than 15 times greater than the average size of the pores.

9. The electrode of claim 1, wherein the plurality of cavities define a cylindrical, pyramidal, conical, rectangular, square, or polygonal shape.

10. The electrode of claim 1, wherein the electrode is a cathode.

11. The electrode of claim 10, wherein the cathode comprises at least one of oxygen, sulfur, selenium, or tellurium.

12. The electrode of claim 1, wherein the plurality of cavities are arranged in a regular matrix or an irregular matrix.

13. An electrochemical device comprising:
- a first electrode;
- a second electrode, the second electrode comprising:
- a body that includes an active material configured to react with ions in an electrochemical reaction within the electrochemical device, the body comprising:
- a first surface; and
- a plurality of cavities extending a depth from the first surface into the second electrode, and
- a separator comprising an electrolyte,
wherein the separator is arranged between the first electrode and the second electrode and prevents direct electrical connection between the first electrode and the second electrode,
wherein the first surface abuts against the electrolyte,
wherein the plurality of cavities define pathways into the second electrode that receive the electrolyte,
wherein the pathways are configured to improve ion transfer from the electrolyte to an inner subset of the active material that is located closer to one or more of the pathways than to the first surface.

14. The electrochemical device of claim 13, wherein a mean distance between the electrolyte within the pathways and the active material within the inner subset of the second electrode is at least 20% less than a mean distance between the electrolyte that abuts the first surface and the active material within the inner subset of the second electrode.

15. The electrochemical device of claim 13, wherein the second electrode defines pores and a size of each of the plurality of cavities is greater than an average size of the pores.

16. The electrochemical device of claim 13, wherein the second electrode is a cathode.

17. The electrochemical device of claim 13, wherein the second electrode is an anode.

18. The electrochemical device of claim 13, wherein the first electrode is an anode and the second electrode is a cathode, wherein the first electrode comprises:
- a body that includes an active material configured to react with the ions in an electrochemical reaction within the electrochemical device, the body comprising:
- a first surface; and
- a plurality of cavities extending a depth from the first surface into the first electrode,
wherein the first surface of the first electrode abuts against the electrolyte,
wherein the plurality of cavities of the first electrode define pathways into the first electrode that receive the electrolyte,
wherein the pathways of the first electrode are configured to improve ion transfer from the electrolyte to an inner subset of the active material of the first electrode that is located closer to one or more of the pathways of the first electrode than to the first surface of the first electrode.

19. A method of manufacturing an electrode comprising:
- forming a body of the electrode that includes an active material that is configured to react with ions in an electrochemical reaction within an electrochemical device, the body comprising pores; and
- forming a plurality of cavities within the body extending a depth from a first surface of the body, wherein a size of each of the plurality of cavities is greater than an average size of the pores.

20. The method of claim 19, wherein forming the plurality of cavities comprises one of laser drilling, indenting, mechanical milling, electron beam machining, focused ion beam milling, electrical discharge milling, microfabrication, reactive-ion etching, imprinting, or three-dimensional printing.
